# EUROPEAN PATENT APPLICATION

(11) **EP 4 776 610 A1**
(43) Date of publication of application: **15.07.2026**
(21) Application number: 25151832.0
(22) Date of filing: 14.01.2025
(51) Int. Cl.: H04N 13/25, H04N 13/111, H04N 13/156, H04N 13/239, H04N 13/243

(54) **DEVICES AND METHODS FOR PROVIDING AN ENHANCED VIEW OF AN IMAGE**

(71) Applicant: Leica Instruments (Singapore) Pte Ltd, Singapore 618299 (SG)
(72) Inventor: Jung, David, 618299 Singapore (SG)
(74) Representative: Paustian & Partner Patentanwälte mbB

(57) **Abstract**

A first aspect of the present disclosure is related to a device for providing an enhanced view of an image,
configured to:
- obtain a first stereo image, S-image, from a first perspective on a sample, wherein the S-image comprises a left and a right image as stereo information;
- obtain a second image, A-image, from a second perspective on the sample;
- determine an auxiliary image, AUX1-image , based on the S-image, wherein the AUX1-image is determined for the second perspective;
- determine an integrated image, INT1-image, based on the A-image and on the AUX1-image;
- provide an image based on the INT1-image, in particular the INT1-image, for display.

## Description

### Technical Field

This disclosure is related to devices and methods for providing an enhanced view of an image, in particular of a biperspective medical and/or diagnostic imaging device.

### Background

A dual-camera setup in an imaging device, e.g. a surgical microscope, can provide several key advantages. First, it can offer an operator, e.g. a surgeon, and an assistant individualized, high-quality visual feeds without compromising image clarity or brightness. Each can adjust magnification, focus, or display settings independently, enhancing both comfort and workflow. The assistant's camera allows for simultaneous observation, improving team coordination and communication. Such a setup may however be costly and/or affected by spatial constraints. Improvements are desirable.

### Summary

An object of the present disclosure is to improve a quality of an image.

This object is solved by the disclosed embodiments, which are defined in particular by the subject matter of the independent claims. The dependent claims provide information for further embodiments. Various aspects and embodiments of these aspects are also disclosed in the summary and description of the figures below, which provide additional features and advantages.

A first aspect of the present disclosure is related to a device for providing an enhanced view of an image,
*configured to:*
- *obtain a first stereo image, S-image, from a first perspective on a sample, wherein the S-image comprises a left and* a *right image* as *stereo information;*
- *obtain a second image, A-image, from a second perspective on the sample;*
- *determine an auxiliary image, AUX1-image* , *based on the S-image, wherein the AUX1-image is determined for the second perspective;*
- *determine an integrated image, INT1-image, based on the A-image and on the AUX1-image;*
- *provide an image based on the INT1-image, in particular the INT1-image, for display.*

A device according to the first aspect can be a control device, e.g. a specially programmed computer, configured to control an imaging device and/or it can be a part of the imaging device. An imaging device may be configured to observe a sample from two perspectives in a medical and/or diagnostical context. A biperspective medical and/or diagnostic imaging device can be a microscope, an exoscope, etc., wherein the biperspective device may comprise a system with at least two cameras and/or is related to two independent cameras. The two cameras are configured to observe a sample from two different perspectives/viewpoints.

A sample can be any object and/or specimen that can be viewed with an imaging device. In a surgical context, a sample can be an organ of a patient and/or a part of an organ. It can be a biopsy, in particular one that is isolated and analyzed in situ. A sample can be or comprise a bone and/or blood of a patient. A sample can also comprise a suture, an incision, or any other artifact placed within or at a being's body for or during a surgical procedure.

An obtaining of an image in the sense of this disclosure can comprise receiving and/or a fetching an image information.

A first stereo image (S-image) can be provided by a first stereo camera of an imaging system that may be related to a first operator, such as a surgeon who operates a microscope. The image can show visual information, such as normal light or visual light and/or non-visual information, such as infrared information. A first perspective can be based on the viewpoint or mounting point of the first stereo camera.

A stereo camera, such as a camera that captures an S-image, can be a device that uses two lenses placed some distance apart to simultaneously capture two separate images of the same scene (simple stereo). A stereo camera can also comprise a more complex design beyond two fixed lenses. Such cameras could include multiple lenses or sensor arrays, adjustable interaxial distances, automated alignment systems, synchronized shutters, and/or integrated computational processing.

A second stereo image (A-image) can be provided by a second camera that may be related to a second operator, such as an assistant, who observes the same sample. The second camera can be a single-view camera or a stereo camera. The A-image may represent light from the same spectrum as the S-image or from an overlapping spectrum.

An auxiliary image (AUX1-image) may be a single view image or a stereo image. An AUX1-image may be determined by a device according to the first aspect of this disclosure and/or its determination may be controlled by such a device. An auxiliary image may have an identical or similar (overlapping) spectrum as an S-image and/or an A-image. The AUX1-image is not measured by a distinct camera. Rather, it may be determined based on information of existing cameras that are configured to observe a sample from different perspectives. An AUX1-image may be determined based on either or both of an S-image or an A-image. Based on the information comprised by one of these images perspective information can be provided to change the first perspective information of an S-image at least to be closer to the second perspective (i.e. the perspective of the A-image). Furthermore, an AUX1-image may be based on the information provided by an A-image. Based on this information, information can be provided to adapt the first perspective information of the S-image further to the second perspective, in particular such that the perspective of the AUX1-image is essentially the same as the second perspective (i.e. the perspective of the A-image).

An integrated image, INT1-image, is based on an A-image and on an AUX1-image. After an AUX1-image is determined it is used to enhance the A-image. This may include further processing of the AUX1-image, e.g., filtering, resizing and/or rotating the AUX1-image. An INT1-image can be determined by merging an A-image with an AUX1-image, e.g. by laying over a transparent AUX-1 image over an A-image, or vice versa. The A-image and the AUX1 image may be synchronized, in particular from the same time. Alternatively, both images may also be from different times.

A providing of an image in the sense of this disclosure can comprise sending the information about the image to one or more receivers, in particular a display, and/or storing the information for others to fetch, e.g. storing the information in a shared memory.

By using first perspective information of an S-image for a second-perspective A-image, information captured only in a first perspective can be transformed to be used for a second perspective. This can be helpful for an imaging system, such as a microscope, that is equipped with two cameras that observe a sample from two different perspectives, one for a surgeon and one for an assistant. In this case information captured only by one camera (e.g. in the S-image) can be used to enhance the information captured by the other camera (e.g. the A-image). For example, in case the camera for S-images captures a sample (or at least parts of the sample) with a higher resolution, this can be used to enhance an A-image. Additionally or alternatively, in case the camera for A-images captures a sample (or at least parts of the sample) with higher depth-of-field than a camera for S-images , parts of an S-image that are less sharp than parts of an A-image can be replaced by sharp information from the A-image.

Using complementary camera/image information in such a way may save costs and may need less installation space.

An embodiment of the first aspect is related to a device for providing an enhanced view of an image,
*wherein the AUX1-image comprises a first resolution and the A-image comprises a second resolution, which is smaller than the resolution of the AUX1-image; and*
*wherein the determination of the INT1-image comprises enhancing parts of the A-image with low resolution with parts of the AUX1-image with high resolution.*

One way to achieve both high and low resolution imaging is to use two cameras with separate optical paths. The first camera can have a longer focal length lens, larger sensor, and high pixel count for capturing fine details, while the second camera may have a shorter focal length lens and smaller sensor to capture a wider field of view at lower resolution. They may be placed side by side, rotated in a certain angle, or share an optical path via a beamsplitter. This allows each camera to fulfill specific tasks: the high-resolution camera may zoom in on small features, while the low-resolution camera provides an overview of the entire sample.

Additionally or alternatively, the differences in resolution may be caused by different zoom systems. S-images may be captured with an analog zoom that in particular retains a certain resolution. This may be done with a camera for A-images and an analog zoom lens. A-images may be captured with a digital zoom, in particular one that does not retain a certain resolution for a similar or a same zoom factor of an A-image, because it may achieve this zoom factor by cropping and resizing the original image. In this case, higher resolution information from an S-image can be used to enhance A-images (or parts of A-images) with lower resolution.

Parts of low resolution and parts of high resolution can be based on a pre-defined, in particular adjustable, threshold. The threshold can in particular be adjusted by the second operator, in particular in real-time and/or during a sample observation, who obtains the enhanced, INT1-image. In this way the second operator, e.g. an assistant, can decide on its own which information from its own camera is used and which information comes from the first operator's, e.g. a surgeon's, camera.

The AUX1 -image is based on an S-image and the latter can comprise sharp parts and non-sharp parts, due to a constraint depth-of-field of the S-image. The resolution enhancement can be based on the sharp parts. These sharp parts can replace the corresponding parts in an A-image. Since a S-image may have higher resolution (e.g. due to the optical zoom system) than an A-image, an enhanced image (INT1-image) may have sharp parts with low resolution (coming from the A-image) and sharp parts with high resolution (coming from the S-image). Sharp parts and non-sharp parts of an image can be based on a pre-defined, in particular adjustable, sharpness threshold. Analog to the resolution threshold, the sharpness threshold may be configured to be adjustable by the second operator.

An embodiment of the first aspect is related to a device for providing an enhanced view of an image,
*wherein the AUX1-image is determined based on a disparity map between the left image and the right image of the S-image.*

A disparity map may be a two-dimensional representation indicating, e.g. for each pixel in a stereo image, the difference in positions between the left and right views. Each pixel's intensity corresponds to a disparity, allowing recovery of relative depths and enabling three-dimensional understanding of the scene from the two-dimensional left and right images. Based on the disparity (map) pixels for any perspective on the baseline (i.e. a straight line between the left and the right image) can be determined. A disparity map can be determined by mapping the left image of a stereo camera to a right image and/or another disparity map can be determined by mapping the right image to the left image. Disparity maps can be created for stereo images, such as S-images. Since, the stereo cameras are aligned vertically, the correspondence problem, i.e. to find corresponding sample pixel of the image of the left camera in the right camera image, can be solved line by line.

Based on the generated disparity maps, a first auxiliary image (AUX1-image) can be determined for any point on a baseline between the left image and the right image of the S-image. In one embodiment, each pixel in an original image may be shifted based on a weighted disparity (disparity value in the same pixel coordinate) to a new estimated image. For example, the pixel at location (1,1) has a disparity value of 12, then it can be mapped based on half of the disparity (= 6) to a pixel (1,7) in the new image. This can be done for every pixel in the original image.

An embodiment of the first aspect is related to a device for providing an enhanced view of an image,
*wherein the A-image is a stereo image comprising a right image and a left image* as *stereo information, and*
*wherein the device is configured to:*
   - *determining the AUX1-image as a stereo image with a left image and a right image; and*
*wherein the INT1-image is determined as a stereo image with a right image and* a *left image* ;
*and wherein:*
   - *the left image of the INT1-image is determined based on the left image of the A-image and the left image of the AUX1-image ; and*/*or*
   - *the right image of the INT1-image is determined based on the right image of the A-image and the right image of the AUX1-image.*

An A-image can be a stereo image with a similar or a same stereo configuration as an S-image. For simple stereo this means that the distance between the left image and the right image of an A-image can be similar or essentially the same as the distance between the left image and the right image of an S-image. This enables a second operator a 3D-view of an observed sample.

In such a case, an INT1-image can be enhanced by stereo information from an A-image and an S-image. Therefore, an AUX1-image may comprise a left image and a right image as well. The left image and the right image can be the same image, e.g. based on the single-view AUX1-image determined as described above. Additionally or alternatively, the AUX1-image can be determined as a stereo image with a left image and a right image differing accordingly. They may differ such that a difference between the left and the right image of a stereo A-image are taken into account. For example, the left and the right image of an AUX1-image may be processed to represent (essentially) the same perspective as an A-image. In particular the left image of the AUX1-image may be processed to take the same perspective as the left image of the A-image and the right image of the AUX1 -mage may be processed to take the same perspective as the right image of the A-image. In this way information from an S-image are adapted to match the perspective(s) of an A-image.

When using information from one camera (i.e. from one perspective) to the other camera (i.e. in the other perspective) in an embodiment where the first perspective and the second perspective are rotated by 90° (or rotated/shifted by any other amount) a further transformation may be needed to account for this perspective change and transform the information accordingly, in this case, e.g. by rotating the AUX1 image by 90° before determining a left and a right AUX1-image.

An embodiment of the first aspect is related to a device for providing an enhanced view of an image,
*wherein the AUX1-image is determined based on a disparity map between the left image and the right image of the A-image.*

A disparity map of an A-image can be determined in the same principal way as described above for a disparity map of an S-image. By using a disparity map of an A-image, the left and the right AUX1-images can be adapted to the second perspective, i.e. to the stereo perspective of an A-image.

Such a determination can in particular be based on an AUX1-image that had been determined - in a first step - as an image on the baseline between the left image and the right image of an S-image, in particular at a point on the baseline which is closest to a baseline of an A-image. In case the baseline of the A-image intersects the baseline of the S-image (at least in two dimensions, because the two cameras of these images may not be located on the same plane such that their baselines may never intersect in three dimensions), the AUX1-image can be determined - in a first step - at the intersection point on the baseline of the S-image.

In case the baseline of the A-image intersect the baseline of the S-image in their center, the AUX1-image can be based - in a first step - as a middle image between the left image and the right image of the S-image. Then in a second step, this AUX1-image can be further processed based on the disparity map of the A-image to match the perspectives of the left and the right image of the A-image. In case the baseline of the A-image intersects the baseline of the S-image in the center of the A-image-baseline, the AUX1-image of the first step can be adapted by the same amount (e.g. half the distance of the respective disparity, but as the two disparity maps are different, the final shift amount may be different as well), but in different directions to match the perspectives of the left and the right image of the A-image. Or in other words, the AUX1-image may be further determined based on half a disparity distance (for each point of the disparity map) of the A-image. This may provide an effective transformation of a first stereo-perspective information to a second stereo-perspective information.

An embodiment of the first aspect is related to a device for providing an enhanced view of an image,
*wherein the A-image comprises a first depth-of-field, DoF, and the S-image comprises a second DoF, which is smaller than the first DoF; and configured to:*
- *determine an INT2-image based on the S-image, wherein parts of the S-image with low sharpness are enhanced with parts of the A-image with higher sharpness.*

Depth-of-field is related to the distance in a photo that appears sharp. It can depend on aperture, focal length, subject distance, and sensor size. A large aperture may yield shallow focus, while a small aperture may increase sharpness. A relatively lower depth of field can also be caused by an analog zoom of a camera for S-images and a digital zoom used for A-images. In other words, a low DoF results in fewer sharp image parts than with high DoF. Hence, some of the less sharp / blurry image parts of the S-image can be replaced by using shaper parts of the A-image. For example, an analog zoomed S-image may be captured with a lower DoF than a digitally zoomed A-image. In this case the parts of the S-image that are not sharp maybe enhanced (e.g. replaced) by information of the A-image with higher sharpness. In this way, information of an A-image can be used to improve an S-image. In case, resolution information from the S-image is used for improving an A-image and sharpness (information due to a high DoF) information of an A-image is used to improve an S-image, both images can be enhanced based on the respective strength of the other image.

The enhanced image (INT2-image) may have sharp parts with high resolution (coming from an S-image) and sharp parts with low resolution (coming from the A-image). Sharp and non-sharp parts may be differentiated based on a pre-defined threshold, which can also be adjustable by the first operator. Additionally or alternatively, a differentiation can be based on the disparity map. Areas with low disparity are in focus, while a high disparity indicates areas out of focus. Hence, a threshold can be based on a disparity rather than on a sharpness measure or on both parameters. An adjustment can be done in the same way as proposed for the second operator above. Thereby, the first operator, e.g. a surgeon, can decide which information to be use from its own camera and which information to be used from its assistant's camera. Additionally or alternatively, the thresholds/settings can be predefined, and the user is not able to change these during operation.

In an embodiment, a single threshold can be used, which considers both sharpness and resolution and weight up whether a high resolution, low DoF image is better or worse than the low resolution, high DoF image. The threshold then defines, which part of an image is used. This threshold type can be used for both enhancements.

An embodiment of the first aspect is related to a device for providing an enhanced view of an image,
*wherein a second auxiliary image, AUX2-image, is determined based on a disparity map between the left image and the right image of the A-image.*

Analog to the determination of the AUX1-image for improving the A-image, an AUX2-image can be determined to improve the S-image. This can be based, e.g. in a first step, on the left and image of the A-image to obtain a single-view AUX2-image. For example a single-view AUX2-image can be obtained for the middle of a baseline of an A-image. This can be determined based on half the disparity at each point of a disparity map of an A-image. If two AUX2-images are generated based on both disparity maps from the stereo A-images, then a final single view AUX2-image can be based on averaging these two AUX2-images. This may make in particular sense in case the baseline of the S-image intersects the baseline of the A-image in the center of the A-image-baseline (at least when projected to two dimensions perpendicular to the direction of the sample, because the two cameras for these images may not be located on the same plane such that their baselines may never intersect in three dimensions).

An embodiment of the first aspect is related to a device for providing an enhanced view of an image,
*configured to:*
   - *determining the AUX2-image as a stereo image with a left image and* a *right image; and*
*wherein the INT2-image is determined as a stereo image with a left image and a right image ; and wherein:*
   - *the left image of the INT2-image is determined based on the left image of the S-image and the left image of the AUX2-image; and*/*or*
   - *the right image of the INT2-image is determined based on the right image of the S-image and the right image of the AUX2-image.*

This can in particular be done, in case the AUX2-image had been determined - in a first step - as a single view image on the baseline of the S-image (e.g. as a middle image). Then the first-step-AUX2 can be adapted to match the stereo perspective of the S-image, i.e. one left AUX2-image may be generated for the left S-image. Additionally or alternatively, one right AUX2-image may be generated for the right S-image. In a simple variant the (same) first-step-AUX2-image may be used for both, the left and the right image of the second-step AUX2 image. In a more complex variant, the AUX2-image may be determined to match the perspective of the left S-image, and a right AUX-2 image may be determined to match the right image of the S-image. In this way the S-image can be enhanced even better by the A-image information.

An embodiment of the first aspect is related to a device for providing an enhanced view of an image,
*wherein the AUX2-image is determined based on a disparity map between the right image and the left image of the S-image.*

The AUX2-image can be determined based on a disparity map of the S-image to adapt the AUX2-image to the first perspective. This can be done in principle in the same way as described above for mapping the AUX1-image to the second perspective. A stereo AUX2-image can be determined based on half a disparity distance of the disparities in an S-image disparity map. This may in particular make sense in case the baseline of the A-image intersects the baseline of the S-image (at least when projected to two dimensions towards the sample) in the center of the S-image-baseline.

An embodiment of the first aspect is related to a device for providing an enhanced view of an image,
*comprising:*
- *a first stereo camera with an analog zoom for S-images for the first perspective;*
- *a second camera with a digital zoom for A-images for the second perspective.*

An analog zoom may be achieved by mechanically shifting one or multiple lens groups within an optical assembly, varying the focal length for continuous magnification. This may change the field of view in real time without altering sensor resolution. Typically, a motorized mechanism or manual control adjusts the lens spacing to achieve the zoom. The lens can be an integral and/or a functional part of the first stereo camera.

A digital zoom may magnify an image by cropping and/or resizing a captured frame without changing the lens's focal length. A portion of the sensor's data may be enlarged and/or selected. A digital zoom may be simpler than optical zoom but can result in reduced image quality due to pixelation, as the apparent resolution may be lower or only artificially increased.

An embodiment of the first aspect is related to a device for providing an enhanced view of an image,
*comprising:*
- *a first stereo camera for the first perspective* ;
- *a second camera for the second perspective* ; *and wherein the second camera is a stereo camera.*

In particular the second camera can be a stereo camera with the same (or essentially the same) distance (baseline) between a left and a right image than the first stereo camera. Alternatively, the second camera can have a different stereo base.

An embodiment of the first aspect is related to a device for providing an enhanced view of an image,
*comprising:*
- *a first stereo camera for the first perspective* ;
- *a second camera for the second perspective* ; *wherein the second camera is located between the left camera and the right camera of the first camera, in particular such that:*
   - *if the second camera is a single-view camera, an optical axis of the second camera intersects a baseline of the first camera; or*
   - *if the second camera is a stereo camera, a baseline of the second camera intersects a baseline of the first camera, in two dimensions.*

If the second camera is a single-view camera, an optical axis of the second camera intersects the baseline of the first camera, in particular the second camera can be located on the baseline of the first camera.

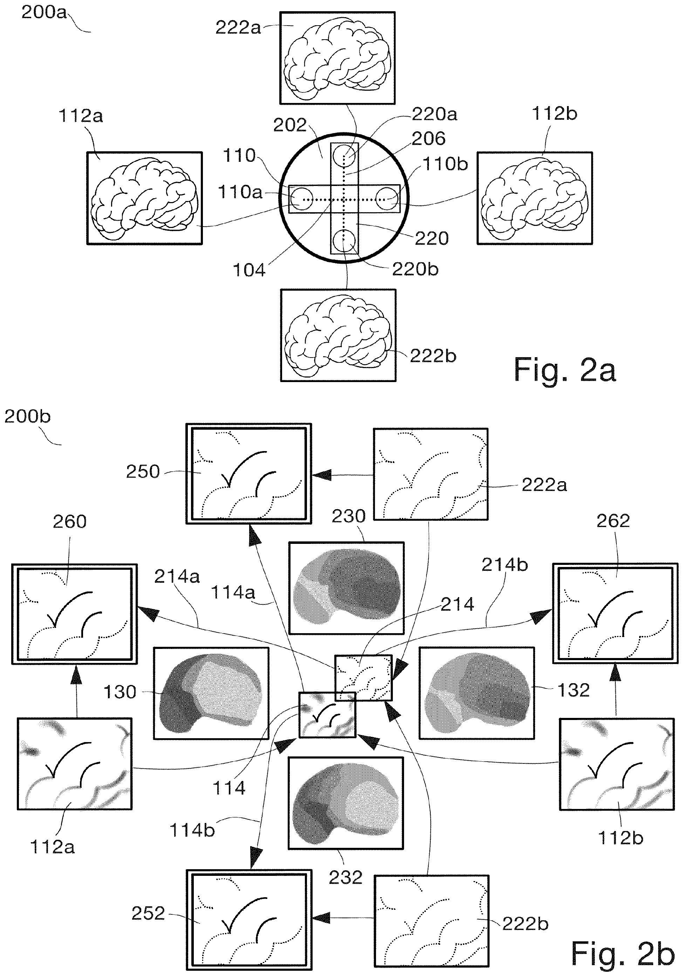

If the second camera is also a stereo camera, both stereo cameras can have (essentially) the same distance between their left and their right camera. Additionally the second camera can view a sample from a second perspective which is translated and/or rotated from the first perspective (i.e. the perspective of the first stereo camera). In particular both cameras are rotated relative to each other, e.g. by an angle of 90°. If they are only rotated relative to each other, then the baselines of the two cameras intersect in their respective baseline-centers, at least when projected in two dimensions in the direction of the sample (as can be seen in Fig. 2a). In particular both cameras are arranged such that the first perspective and the second perspective are only rotated, e.g. by 90°, relative to each other. In this case, for processing information based on one of the camera with information from the other camera, the image(s) of one camera has to be rotated by 90°. This can be the case, e.g. when enhancing an A-image by AUX1-image information and/or when enhancing an S-image by AUX2-image information.

An embodiment of the first aspect is related to a device for providing an enhanced view of an image,
*wherein the first perspective of the S-image is rotated 90 degrees relative to the second perspective of the A-image ; and*
*configured to:*
   - *determine a rotated S-image by 45 degrees;*
   - *determine a rotated A-image by 45 degrees, such that the rotated S-image are aligned with their respective sides with the A-image;*
   - *determine a third estimated stereo image, in particular an AUX1-image or an AUX2-image, based on a disparity map between the left image and the right image of the rotated left image and the rotated right image of the S-image and*/*or of the A-image.*

If the left image of an S-image and a left image of an A-image are mapped by 45 degrees, then a 'virtual' stereo image pair can be created. Therefore, part of the images that are not completely overlapping, e.g. due to the aspect ratios, may be ignored and a direct mapping based on a disparity of the two rotated images can be performed. This may be done from the left image of the S-image to the right image of the A-image and from the right image of the S-image to the left image of the A-image to add information to occluded areas and improve the result. The third image may be rotated by 45° in the opposite way as the rotated S-image to match the orientation of the original A-image. For an output image the third image and the A-image can be combined.

A second aspect of the present disclosure is related to a device for providing an enhanced view of an image,
*configured to:*
- *obtain a first stereo image, S-image, from a first perspective on a sample, wherein the S-image comprises a left and a right image* as *stereo information;*
- *obtain a second image, A-image, from a second perspective on the sample;*
- *determine a third image, AUX2-image, based on the A-image, wherein the AUX2-image is determined for the first perspective ;*
- *determine an integrated image, INT2-image, based on the S-image and on the AUX2-image;*
- *provide an image based on the INT2-image, in particular the INT2-image, for display.*

Enhancement of an S-image by information of an A-image and based on DoFs that are differing in both images, has been explained in relation to the first aspect of this disclosure. In the first aspect, however, embodiments with an S-image enhancement are described together with an enhancement of an A-image based on resolutions differing in both images. Hence, theses embodiments of the first aspect describe a cross-enhancement, where an A-image is enhanced by a superior resolution - at least in parts - of an S-image and an S-image is enhanced by a superior sharpness - at least in parts - of an A-image.

Determining an AUX2-image "for" the first perspective may mean that the AUX2-image is determined essentially for the first perspective or such that the AUX2-image comes closer to the first perspective in relation to the second perspective of the A-image. (Analogously this also holds for a determination of an AUX1-image "for" a second perspective.)

In the second aspect, an enhancement of an A-image is not required. The aspect is related to an enhancement of an S-image (i.e. a generation of an INT2 image). An enhancement of the A-image may be part of an embodiment of the second aspect. The second aspect and/or embodiments of the second aspect can comprise one or more features and/or one or more functions as described in relation to the first aspect.

A third aspect of the present disclosure is related to a method for providing an enhanced view of an image,
*comprising the steps:*
- *obtaining a first stereo image, S-image, from a first perspective on a sample, wherein the S-image comprises a left and a right image as stereo information;*
- *obtaining a second image, A-image from a second perspective on the sample;*
- *determining one or both of:*
   -- *a first auxiliary image, AUX1-image, based on the S-image, wherein the AUX1-image is determined for the second perspective;*
   -- *a second auxiliary image, AUX2-image, based on the A-image, wherein the AUX2-image is determined for the first perspective;*
- *determining an integrated image, INT1-image, based on:*
   - *a first integrated image, INT1-image, based on the A-image and on the AUX1-image in case the AUX1-image is based on the S-image;*
   -- *a second integrated image, INT2-image, based on the S-image and on the AUX1-image in case the AUX1-image is based on the A-image;*
- *providing an image based on the INT1-image, in particular the INT1-image, and*/*or an image based on the INT2-image, in particular the INT2-image, for display.*

A method according to the third aspect can comprise steps for features and/or functionalities of any embodiment disclosed in relation to the first and/or the second aspect of this disclosure and/or to one or more of the embodiments disclosed in relation to the figures below.

A further aspect of the present disclosure is related to a computing device comprising a processor configured to carry out the method according to any one of preceding aspects/embodiments.

A further process of the present disclosure is related to a computer program product comprising instructions which, when the program is executed by a computer system, cause the computer system to carry out the method according to any one of the preceding aspects/embodiments.

A further aspect of the present disclosure is related to a computer-readable medium comprising instructions which, when executed by a computer system, cause the computer system to carry out the method according to any one of the preceding aspects/embodiments.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Figs. 1a and 1b illustrates an imaging device and its functioning according to embodiments of this disclosure.
Figs. 2a and 2b illustrates an imaging device and its functioning according to embodiments of this disclosure.
Fig. 3 illustrates a microscope system according to or for embodiments of this disclosure.

Although some aspects have been described in the context of an apparatus (or a system) in the present disclosure, the description of these aspects also represents a description of the corresponding method, where a block or device corresponds to a method step or a feature of a method step.

Analogously, aspects described in the context of a method step also represent a description of a corresponding block, item, or feature of a corresponding apparatus or of a system that may in particular be distributed over different locations and is configured to exchange information between the different locations with respective communication means.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

As used herein the term "and/or" includes any and all combinations of one or more of the associated listed items and may be abbreviated as "/". Expressions as, "for example", "e.g.", or "in particular" denote facultative or optional features that can be combined with all other (mandatory, facultative, or optional) features of the aspects or embodiments of this disclosure, until explicitly stated otherwise.

In the following description reference is made to the accompanying figures which form part of the disclosure, and which illustrate specific aspects in which the present disclosure can be understood. Identical reference signs refer to identical or at least functionally or structurally similar features.

### Detailed description

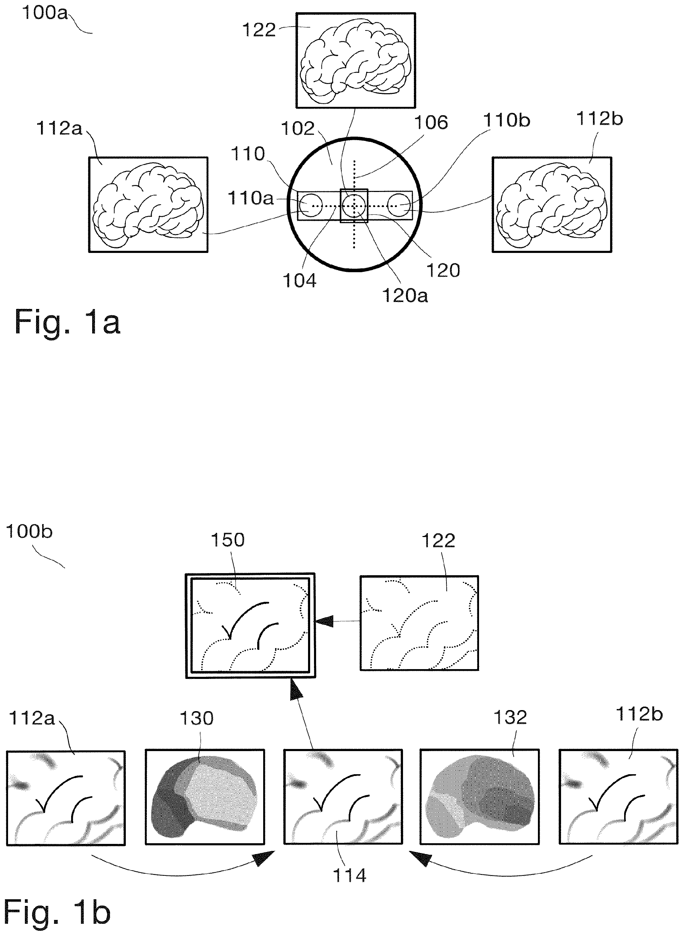

Fig. 1a illustrates images and a general structure of an imaging device 100a according to an embodiment of this disclosure. In this embodiment information of a camera for a first operator is used to enhance an image of a camera for a second operator. An imaging device 102 for a first operator comprises a first stereo camera system 110, e.g. for a surgeon. The first stereo camera system 110 comprises a stereo camera for visual light images. Each stereo camera of the system 110 has a left camera 110a and a right camera 110b. The first camera system comprises an analog zoom functionality, e.g., by one or more zoom lenses.

Furthermore, the imaging device 102 for the second operator, e.g. an assistant, comprises a second camera system 120, which is a single view camera. The second camera system comprises a camera for visual light images. The second camera system 120 is equipped with a digital zoom. The installation with an analog zoom and a digital zoom safes installation space and costs.

The left and the right camera of the first stereo camera system 110 are arranged with a distance between them. This distance is called baseline 104 and defines a first perspective. The second camera system 120 is arranged in the middle of the baseline 104 of the first camera system. The first stereo camera system 110 produces two image types based on the first perspective: A left visual light image 112a of the sample and a right visual light image 112b of the sample. The second stereo camera system 120 produces images 122 from a second perspective.

Fig. 1b illustrates a functioning 100b of the device 102 of Fig. 1a. With its first stereo camera system 110 the device captures zoomed images 112a and 112b. Due to the constrained depth-of-field (DoF), the images 112a, 112b in Fig. 2 comprise sharp parts and blurry parts.

Based on the left image 112a and on the right image 112b of the stereo camera 110, two disparity maps are generated. A first disparity map 130 is generated by mapping the right image 112b to the left image 112a. A second disparity map 132 is determined by mapping the left image 112a to the right image 112b.

Based on the two disparity maps 130, 132, the left image 112a and the right image 112b of the first stereo camera system 110 are mapped to the center of the baseline. This is done by shifting pixels from the left image 112a based on half of the disparity of the corresponding value in the disparity map 130 and by shifting pixels from the right image 112b based on half of the disparity of the corresponding value in the disparity map 132. The resulting auxiliary images are averaged to obtain an auxiliary image 114 that depicts the first perspective information from the stereo camera for the second perspective, i.e. from the perspective of the single view camera. Due to the analog zoom of the first camera system 110, the auxiliary image 114 comprises a constant resolution.

With the second camera system 120 the sample is captured by a digital zoom image 122. However, due to the digital zoom the image 122 comprises a lower resolution as the images of the first camera system and as the auxiliary image 114. Therefore, the sharp and high resolution parts of the auxiliary image 114 are used for the respective low resolution parts of the image 122. The enhanced image 150 represents information from the first camera system 110 and from the second camera system 120, from the second perspective. In this way an assistant image can be provided, as a sharp image and - at least in part - with high resolution.

Fig. 2a illustrates images and a general structure of an imaging device 200a according to an embodiment of this disclosure. In this embodiment information of a camera for a first operator are used to enhance an image of a camera for a second operator and additionally information of the camera for the second operator is used to enhance an image of a camera for the first operator.

The camera system 202 for the first operator, which can e.g. be a surgeon, comprises a first stereo camera 110 similar to the respective camera for the first operator in Fig. 1a. As in the embodiment of Fig. 1a, the first stereo camera 110 is equipped with an analog zoom system.

The camera 220 is also a stereo camera with a left camera 220a capturing left images 222a and a right camera 220b capturing right images 222b. The second stereo camera 220 is equipped with a digital zoom system. This combination safes costs and installation space. The second perspective 206 of the second stereo camera 220 is concentric with the first perspective 106 of the first stereo camera 110 but rotated by 90°. Hence, the baselines 104, 206 of the first stereo camera 110 and of the second stereo camera 220 intersect each other, at least in a two-dimensional projection, as depicted in Fig. 2a (the two cameras may differ in their distance to the sample though). Via this setup, the surgeon and assistant have essentially the same view on a sample, only rotated by 90°.

Fig. 2b illustrates a functioning 200b of the device 202 of Fig. 2a. With its first stereo camera 110 the device captures zoomed images 112a and 112b with an analog zoom and provides auxiliary information via disparity-based transformations based on disparity maps 130, 132 of first stereo camera images 112a, 112b. This yields the first single view auxiliary image 114 and is implemented similarly or equally as in the previously described embodiment described in Fig. 1b. Since the first camera 110 has an analog zoom and the second camera has a digital zoom, zoom images of the first camera retain their resolution, while zoom images of the second camera 220 lose their resolution (since the zoom is based on cropping parts of the original image).

In the embodiment described here, the second operator can also observe the sample with a stereo camera. Therefore, the first single view auxiliary image 114 - determined in the first step - can be further adapted to the stereo view 206 of the second operator. This is done via disparity based-transformations based on disparity maps of second camera images 222a, 222b. In a second step, the first auxiliary image 114 is processed via transformation 114a to obtain a left auxiliary image. Furthermore, the first auxiliary image 114 is processed via transformation 114b to obtain a right auxiliary image. The transformation 114a shifts the pixels of the auxiliary image 114 by half the disparity of the respective pixel in the disparity map 230 to the left. The transformation 114b shifts the pixels of the auxiliary image 114 by half the disparity of the respective pixel in the disparity map 232 to the right.

Another option is to shift image 114 by half the disparity map 232 (transformation 114a and/or to shift image 114 by the negative (opposite direction) half disparity map of 230 (transformation 114b.).

(Before the transformations 114a, 114b can be applied, auxiliary image 114 has to be rotated by 90° to match the orientation of the second stereo camera 220.)

The left auxiliary image of transformation 114a is then combined with the left second camera image 222a. This is done such that the sharp areas of the left auxiliary image replace the respective areas of the left second camera image 222a (Sharp areas and non-sharp areas, e.g. of an auxiliary image, can be differentiated by a pre-defined sharpness threshold). Analogously, the right auxiliary image of transformation 114b is combined with the right second camera image 222a. This is done such that the sharp areas of the right auxiliary image replace the respective areas of the right second camera image 222a (Sharp areas and non-sharp areas can be differentiated by a pre-defined sharpness threshold). Since the first auxiliary image has a larger resolution than the zoomed A-image, the resulting integrated stereo image 250, 252 for the assistant has a high sharpness and at least partly a higher resolution than the second camera stereo image 222a, 222b. In the figures, sharp areas with high resolution are indicated with solid lines, sharp areas with low resolution are indicated with dotted lines.

Additionally to the stereo enhancement of the assistant's view, the stereo view of the surgeon can be enhanced as well. Due to the constrained depth-of-field (DoF), the first camera zoom images 112a, 112b in Fig. 2b comprise sharp parts and blurry parts. The enhancement is done by replacing blurry (i.e. non-sharp) areas, caused by a constraint depth-of field, of a first camera image 112a, 112b by sharp areas of a second camera image 222a, 222b adapted to the perspective 106 of the first stereo camera 110. Although the second camera zoom image 222a, 222b has less resolution, it may have a higher DoF, i.e. more sharp areas, compared to a zoom image 112a, 112b of the first camera 110. In the figures, sharp areas are depicted by thin (solid or dotted) lines, while non-sharp areas are indicated by blurry lines.

Therefore, a second auxiliary image 214 is determined in a first step. This is done based on one or both of the disparity maps 230, 232. The left assistant image 222a is transformed based on disparity map 230 such that each pixel of the image 222a is shifted by half of the disparity as defined for this pixel in the disparity map 230. The right assistant image 222b is transformed based on disparity map 232 such that each pixel of the image 222b is shifted by half of the disparity as defined for this pixel in the disparity map 230. Both images are then averaged in order to obtain a more comprehensive second single-view auxiliary image 214.

The auxiliary image 214 can be further adapted to the stereo view 104 of the first operator (i.e. the surgeon). This is done via disparity based-transformations based on disparity maps of first camera images 112a, 112b. In a second step, the second auxiliary image 214 is processed via transformation 214a to obtain a left auxiliary image for the first perspective. Furthermore, the second auxiliary image 214 is processed via transformation 214b to obtain a right auxiliary image for the first perspective. The transformation 214a shifts the pixels of the auxiliary image 214 by half the disparity of the respective pixel in the disparity map 130 to the left. The transformation 214b shifts the pixels of the auxiliary image 214 by half the disparity of the respective pixel in the disparity map 132 to the right. Other implementations are possible as described above. (Before the transformations 214a, 214b can be applied, auxiliary image 214 may be rotated by 90° to match the first perspective, i.e. the orientation of the first stereo camera 110.)

The left auxiliary image of transformation 214a is then combined with the left first camera image 122a. This is done such that the sharp areas of the left auxiliary image replace the blurry areas of the left second camera image 112a (Sharp areas and non-sharp areas can be differentiated by a pre-defined sharpness threshold). Analogously, the right auxiliary image of transformation 214b is combined with the right first camera image 112a. This is done such that the sharp areas of the right auxiliary image replace the respective blurry areas of the right first camera image 112a. Since the second auxiliary image has a lower resolution, the resulting integrated stereo image 260, 262 for the surgeon has a high sharpness (i.e. no or nearly no blurry areas) and at least partly a higher resolution than the second camera stereo image 222a, 222b.

In this embodiment, the surgeon's view is enhanced by replacing low-contrast areas of a first stereo camera zoom image by higher contrast information (albeit with lower resolution) of the second camera and the assistant's view is enhanced by replacing low-resolution areas of a second stereo camera zoom image by sharp and higher resolution information of the first stereo camera. This cross-enhancement allows for high quality images for a surgeon's and an assistant's view without having to generate both views with analog zoom systems.

Some embodiments relate to a microscope comprising a system as described in connection with one or more of the Figs. 1a, 1b, 2a, 2b. Alternatively, a microscope may be part of or connected to a system as described in connection with one or more of the Figs. 1a, 1b, 2a, 2b.

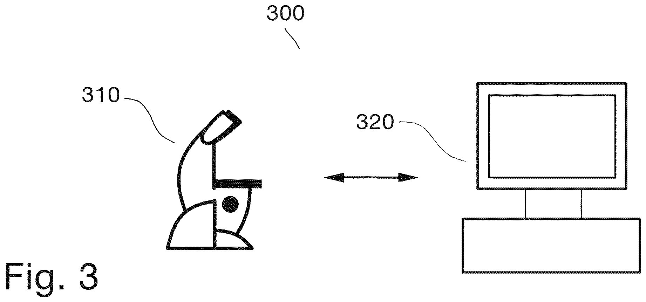

Fig. 3 shows a schematic illustration of a system 300 configured to perform a method described herein. The system 300 comprises a microscope 310 and a computer system 320. The microscope 310 is configured to take images and is connected to the computer system 320. The computer system 320 is configured to execute at least a part of a method described herein. The computer system 320 may be configured to execute a machine learning algorithm. The computer system 320 and microscope 310 may be separate entities but can also be integrated together in one common housing. The computer system 320 may be part of a central processing system of the microscope 310 and/or the computer system 320 may be part of a subcomponent of the microscope 310, such as a sensor, an actor, a camera or an illumination unit, etc. of the microscope 310.

The computer system 320 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 320 may comprise any circuit or combination of circuits. In one embodiment, the computer system 320 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 320 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 320 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 320 may also include a display device, one or more speakers, and a keyboard and/or controller, which can include a mouse, trackball, touch screen, voice-recognition device, or any other device that permits a system user to input information into and receive information from the computer system 320.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference signs

- 100a: images of imaging device
- 100b: functioning of device 102
- 102: imaging device
- 104: baseline
- 110: surgeon camera system
- 110a: left camera
- 110b: right camera
- 112a: left surgeon image
- 112b: right surgeon image
- 114: auxiliary image
- 114a: determining left auxiliary image
- 114b: determining right auxiliary image
- 120: assistant camera system
- 122: single view image
- 130: first disparity map of surgeon camera
- 132: second disparity map of surgeon camera
- 150: enhanced second perspective image
- 200a: images of imaging device
- 200b: functioning of device 202
- 202: surgeon camera system
- 206: second perspective
- 214: second auxiliary image
- 214a: determining left auxiliary image
- 214b: determining right auxiliary image
- 220: assistant camera
- 220a: left camera
- 220b: right camera
- 222a: left assistant image
- 222b: right assistant images
- 250: left integrated assistant image
- 252: right integrated assistant image
- 260: left integrated surgeon image
- 262: right integrated surgeon image
- 300: microscope system
- 310: microscope
- 320: computer system

## Claims

1. A device for providing an enhanced view of an image, in particular of a biperspective medical and/or diagnostic imaging device,
configured to:
- obtain a first stereo image, S-image, (112a, 112b) from a first perspective (104) on a sample, wherein the S-image comprises a left and a right image as stereo information;
- obtain a second image, A-image, (122) from a second perspective (106) on the sample;
- determine an auxiliary image, AUX1-image (114), based on the S-image, wherein the AUX1-image is determined for the second perspective;
- determine an integrated image, INT1-image, (150) based on the A-image and on the AUX1-image;
- provide an image based on the INT1-image, in particular the INT1-image, for display.

2. The device according to the preceding claim,
wherein the AUX1-image (114) comprises a first resolution and the A-image (122) comprises a second resolution, which is smaller than the resolution of the AUX1-image; and
wherein the determination of the INT1-image (150) comprises enhancing parts of the A-image with low resolution with parts of the AUX1-image with high resolution.

3. The device according to one of the preceding claims,
wherein the AUX1-image (114) is determined based on a disparity map (130, 132) between the left image (112a) and the right image (112b) of the S-image.

4. The device according to one of the preceding claims,
wherein the A-image is a stereo image comprising a right image (222a) and a left image (222b) as stereo information, and
wherein the device is configured to:
- determining the AUX1-image (114) as a stereo image with a left image (114a) and a right image (114b); and
wherein the INT1-image is determined as a stereo image with a right image (250) and a left image (252); and wherein:
- the left image (250) of the INT1-image is determined based on the left image (222a) of the A-image and the left image of the AUX1-image (114a); and/or
- the right image (252) of the INT1-image is determined based on the right image (222b) of the A-image and the right image (114b) of the AUX1-image.

5. The device according to the preceding claim,
wherein the AUX1-image (114a, 114b) is determined based on a disparity map (230, 232) between the left image (222a) and the right image (222b) of the A-image.

6. The device according to one of the preceding claims,
wherein the A-image (222a, 222b) comprises a first depth-of-field, DoF, and the S-image (112a, 112b) comprises a second DoF, which is smaller than the first DoF; and
configured to:
- determine an INT2-image (250, 262) based on the S-image, wherein parts of the S-image with low sharpness are enhanced with parts of the A-image with higher sharpness.

7. The device according to the preceding claim,
wherein a second auxiliary image, AUX2-image, (214) is determined based on a disparity map (230, 232) between the left image (222a) and the right image (222b) of the A-image.

8. The device according to the preceding claim,
configured to:
- determining the AUX2-image as a stereo image with a left image (214a) and a right image (214b); and
wherein the INT2-image is determined as a stereo image with a left image (260) and a right image (262); and wherein:
- the left image of the INT2-image is determined based on the left image (112a) of the S-image and the left image (214a) of the AUX2-image; and/or
- the right image of the INT2-image is determined based on the right image (112b) of the S-image and the right image (214b) of the AUX2-image.

9. The device according to the preceding claim,
wherein the AUX2-image (214a, 214b) is determined based on a disparity map (130, 132) between the right image (112a) and the left image (112b) of the S-image.

10. The device according to one of the preceding claims,
comprising:
- a first stereo camera (110) with an analog zoom for S-images for the first perspective (104);
- a second camera (120) with a digital zoom for A-images for the second perspective (106, 206).

11. A device according to one of the preceding claims,
comprising:
- a first stereo camera (110) for the first perspective (104);
- a second camera (220) for the second perspective (206); and
wherein the second camera is a stereo camera.

12. A device according to one of the preceding claims,
comprising:
- a first stereo camera (110) for the first perspective (104);
- a second camera (110, 220) for the second perspective (106, 206);
wherein the second camera is located between the left camera and the right camera of the first camera, in particular such that:
- if the second camera is a single-view camera, an optical axis of the second camera intersects a baseline (104) of the first camera; or
- if the second camera is a stereo camera, a baseline of the second camera (206) intersects a baseline (104) of the first camera, in two dimensions.

13. A device according to one of the preceding claims,
wherein the first perspective (104) of the S-image (112a, 112b) is rotated 90 degrees relative to the second perspective (206) of the A-image (222a, 222b) ; and
configured to:
- determine a rotated S-image by 45 degrees;
- determine a rotated A-image by 45 degrees, such that the rotated S-image are aligned with their respective sides with the A-image;
- determine a third estimated stereo image, in particular an AUX1-image or an AUX2-image, based on a disparity map between the left image and the right image of the rotated left image and the rotated right image of the S-image and/or of the A-image.

14. A device for providing an enhanced view of an image, in particular of a biperspective medical and/or diagnostic imaging device,
configured to:
- obtain a first stereo image, S-image, (112a, 112b) from a first perspective (104) on a sample, wherein the S-image comprises a left and a right image as stereo information;
- obtain a second image, A-image, (122a, 122b) from a second perspective (106, 206) on the sample;
- determine a third image, AUX2-image, (214) based on the A-image, wherein the AUX2-image is determined for the first perspective (104);
- determine an integrated image, INT2-image, based on the S-image and on the AUX2-image;
- provide an image based on the INT2-image, in particular the INT2-image, for display.

15. A method for providing an enhanced view of a zoom image,
comprising the steps:
- obtaining a first stereo image, S-image, (112a, 112b) from a first perspective (104) on a sample, wherein the S-image comprises a left and a right image as stereo information;
- obtaining a second image, A-image (222a, 222b) from a second perspective (106, 206) on the sample;
- determining one or both of:
-- a first auxiliary image, AUX1-image, (114) based on the S-image, wherein the AUX1-image is determined for the second perspective;
-- a second auxiliary image, AUX2-image, (214) based on the A-image,
wherein the AUX2-image is determined for the first perspective;
- determining an integrated image, INT1-image, (250, 252) based on:
-- a first integrated image, INT1-image, based on the A-image and on the AUX1-image in case the AUX1-image is based on the S-image;
-- a second integrated image, INT2-image, (260, 262) based on the S-image and on the AUX1-image in case the AUX1-image is based on the A-image;
- providing an image based on the INT1-image, in particular the INT1-image, and/or an image based on the INT2-image, in particular the INT2-image, for display.
